# EUROPÄISCHE PATENTANMELDUNG

(11) **EP 4 454 877 A1**
(43) Veröffentlichungstag der Anmeldung: **30.10.2024**
(21) Anmeldenummer: 23169462.1
(22) Anmeldetag: 24.04.2023
(51) Int. Cl.: B32B 1/08, B32B 5/02, B32B 7/12, B32B 27/08, B32B 27/12, B32B 27/30, B32B 27/34

(54) **ON- UND OFFSHORE LONG-CHAIN-POLYAMID ROHR MIT VERBESSERTER BARRIEREWIRKUNG**

(71) Anmelder: Evonik Operations GmbH, 45128 Essen (DE)
(72) Erfinder: SCHÜTT, Carsten, 45657 Recklinghausen (DE); VAN LAAK, Hermann, 46569 Hünxe (DE); KUHMANN, Karl, 48249 Dülmen (DE); BRACK, Alexander, 45134 Essen (DE)
(74) Vertreter: Evonik Patent Association

(57) **Zusammenfassung**

Die Erfindung betrifft mehrschichtige Hohlkörper, insbesondere mehrschichtige Polyamid-Rohre, mit verbesserter Barrierewirkung gegen H₂-Permeation.

## Beschreibung

Die Erfindung betrifft einen mehrschichtigen Hohlkörper, der über die Auswahl der eingesetzten Formmassen seiner einzelnen Schichten eine verringerte Permeation von z.B. Wasserstoff (H₂), H₂S, CO₂ und CH₄ aufweist, wobei die Verringerung der Permeation von Wasserstoff (H₂) bevorzugt ist. Der mehrschichtige Hohlkörper ist in erster Linie ein Hohlprofil, wie beispielsweise ein Rohr, oder ein Behälter zum Durchleiten oder Lagern flüssiger oder gasförmiger Medien.

Mehrschichtige Hohlkörper kommen insbesondere als Offshore-Rohr oder Onshore-Rohr, oder ein Teilstück einer entsprechenden Offshore-Rohrleitung oder Onshore-Rohrleitung zum Einsatz. Ein Offshore-Rohr wird üblicherweise auf einem Gewässergrund oder darunter in einem Graben verlegt, ein Onshore-Rohr wird landseitig verlegt. Offshore-Rohre und Onshore-Rohre können derart miteinander zu Rohrleitungen ("Pipelines") kombiniert werden, dass flüssige oder gasförmige Medien über große Strecken sowohl unter Wasser als auch auf dem Festland transportiert werden können. Bekannte Offshore-Rohre und Onshore-Rohre bestehen typischerweise aus Stahl.

Mit dem zunehmenden politisch getriebenen Fokus des Primärenergiesektors auf erneuerbare und klimaneutrale Energieträger oder Leitung und Speicherung klimaschädlicher Gase gerät die konventionelle Stahlrohrinfrastruktur stark ins Blickfeld für sicherheitstechnische Betrachtungen. Besonders Wasserstoffversprödung (HE) von austenitischen Stählen und Schweißverbindungen ist eine Fragestellung, der mit erhöhtem technischen Aufwand begegnet werden muss, speziell wenn die im Vergleich zu Erdgas/Methan geringere Energiedichte von Wasserstoff (H₂) über höhere Drücke kompensiert werden muss. Hierzu sind Systeme erforderlich, welche den gestellten Anforderungen an die H₂-Permeation genügen, welche durch herkömmliche Rohr-Materialien nicht bedient werden.

Unter der Wasserstoffversprödung versteht man die Änderung der Festigkeit von Metallen, genauer ihrer Sprödigkeit, die durch das Eindringen und die Einlagerung von Wasserstoff (H₂) in ihr Metallgitter verursacht wird. Diese Korrosion ähnelt einer Materialermüdung. In der Folge kommt es zu wasserstoffinduzierter Rissbildung, womit insbesondere der Einsatz anfälliger Materialien zur Wasserstoffspeicherung und/oder Wasserstoffleitung begrenzt wird.

Aus dem Stand der Technik sind mehrschichtige Hohlkörper, insbesondere Rohre, bekannt, die mit einer metallischen Barriereschicht, beispielsweise aus Aluminium, zum Schutz vor Wasserstoff versehen sind, die mit einem erhöhter Fertigungs- und Materialaufwand einhergeht. Solche Rohre sind z.B. als Polymer-Verbund-Rohre und "Reinforced thermoplastic pipes" (RTPs) bekannt.

Ferner besteht bei diesen bekannten mehrschichtigen Hohlkörpern bei sehr hohen Drücken die Gefahr eines "Cover-Blow-Off", da Aluminium-Wickellagen über einen langen Zeitraum durch den sogenannten "Tortoise-Effekt" eine Permeation von H₂ unter die nichtverschweißte polymere Umhüllung zulassen und sich dort so über die Zeit ein Partialdruck von H₂ einstellt. Dieser kann zum Verlust der Umhüllung des Hohlkörpers führen.

RTPs finden nur Anwendung in höheren Druckbereichen und gegenwärtig nur onshore.

Des Weiteren sind "themoplastic composite pipes" (TCPs) bekannt. Dies sind verstärkte Verbund-Mehrschichtrohre, bei denen keine Gefahr des "Cover-Blow-Off" besteht. Die H₂-Permeation ist zwar reduziert, aber nicht so gering wie bei den unbonded onshore RTPs mit Aluminium-Schicht.

Die aus dem Stand der Technik bekannten Hohlkörper sind somit nicht in jeder Hinsicht zufriedenstellend.

Es ist daher eine Aufgabe der vorliegenden Erfindung Hohlkörper bereitzustellen, welche Vorteile gegenüber den bekannten Hohlkörpern aufweisen.

Diese Aufgabe wird durch den Gegenstand der Patentansprüche gelöst.

Es wurde überraschend gefunden, dass im Bereich "onshore unverstärkt bis 18 bar" gegenüber RTPs Fertigungs- und Kostenvorteile durch mittels Co-Extrusions-Verfahren hergestellte erfindungsgemäße mehrschichtige Hohlkörper erzielt werden können. Außerdem kann im onshore-Bereich gegenüber Stahl H₂-Versprödung vermieden werden.

Es wurde überraschend gefunden, dass im offshore-Bereich eine noch bessere Sperrwirkung für TCPs erwirkt werden kann, die auf PA12-Basis qualifiziert sind.

Es wurde ferner überraschend gefunden, dass sich über eine Ethylen-Vinylalkohol-Copolymer-(EVOH)-Sperrschicht in einem Mehrschichtrohransatz mit Haftvermittler auf Polyamid(PA)-Basis, insbesondere PA6-und-PA612-Basis (d.h. PA6/PA612-Mischung), im Co-Extrusionsverfahren hochmolekulare, kettenverlängerte Großrohrextrusions bzw. Polyamidformassen auf Polyamid-Basis, insbesondere PA12-Basis, im Hinblick auf H₂-Permeation optimieren lassen.

Es wurde ferner überraschend gefunden, dass ein Rohrverbund mechanisch auch bei deutlich außermittiger Anordnung der EVOH-Sperrschicht funktioniert, z.B. als innerste Schicht in direkter Wechselwirkung mit H₂. Normalerweise liegt diese Schicht bei kleinen Rohren sehr zentral.

Es wurde des Weiteren überraschend gefunden, dass der Haftmechanismus der Haftvermittler-Zusammensetzung auf PA6-und-PA612-Basis erstaunlicherweise mit kettenverlängerten PA-Compounds/Polyamiden funktioniert. Es ist besonders bemerkenswert, dass je nach Zusammensetzung keine Kompatibilisierung notwendig ist.

Die Verwendung der kettenverlängerten PA12-Compounds in Kombination mit einer EVOH-Sperrschicht ermöglicht den Transport von u.a. H₂-Strömen in vorteilhafter Weise, insbesondere im Hinblick auf verringerte H₂-Permeation.

Insbesondere werden durch die Erfindung erstmalig On- und Offshore-Polyamid-Rohre mit großem Durchmesser für mannigfaltige Anwendungen in unverstärkten Systemen für H₂-Ready-Anwendungen (MOP 16 bzw. 18 bar) onshore bis hin zu 100% green H₂ verstärkten Rohren (Thermoplastic Composite Pipes (TCP) und Reinforced Thermoplastic Pipes (RTP)) für offshore-Anwendungen höherer Druckstufen ermöglicht. MOP ist die Abkürzung für "Maximum operating pressure". Dies ist der maximal zulässige Betriebsdruck, mit dem ein System unter normalen Betriebsbedingungen permanent betrieben werden kann.

Die Empfindlichkeit gegenüber HE ist Polyamiden nicht inhärent. HE ist damit von vom herein eliminiert, ebenso "konventionelle" Korrosion. Die Anforderung gegen H₂-Permeation in die Umwelt ist über die Funktionalität der EVOH-Sperrschicht nachweislich bedient. Der relevante Kontext ist "Secondary greenhouse gas emmisions". H₂ ist indirekt klimaschädlich, da es andere direkt wirksame Treibhausgase wie CH₄ und CO₂ länger und damit in größerer Konzentration in der Atmosphäre stabil hält. Es wird politische Bestrebungen in Richtung "zero-Permeation-Lösungen" geben.

Bereits die geometrische Ausführung mit sehr dünner EVOH-Sperrschicht (~0,3 mm) bei einem Gesamtdurchmesser von 50 mm und größer und Wandstärken von 3 mm und größer gewährleisten überraschenderweise eine mechanische Systemperformance ähnlich eines Monorohrs bei drastisch reduzierter H₂-Permeation. Auch EVOH-Sperrschichten kleiner 0,3 mm, wie z.B. eine Schichtdicke von 0,1 mm, reduzieren die H₂-Permeation erheblich gegenüber dem Monorohr. Auch dickere Schichten (bis 0,8 mm) wurden untersucht. Es konnten keine Unterschiede hinsichtlich der mechanischen Performance ermittelt werden.

Ein weiterer potentieller Nutzen ist im Transport von überkritischem CO₂ zu sehen, welcher ein erhebliches Problem für Stahl darstellt. Weitere Anwendungsfelder umfassen die Förderung von mehrphasigen Fluiden mit hohen Anforderungen an die Barrierewirkung (H₂S, CO₂, CH₄, etc).

Ferner ist der mehrschichtige Hohlkörper gut zu verarbeiten und ist wickelbar, insbesondere in industrierelevanten Durchmessern wickelbar.

Erfindungsgemäß können Rohraufbauten somit flexibler gestaltet werden und die Anordnungen und Geometrien der EVOH-Sperrschicht abhängig vom Rohraufbau bzw. den übrigen Schichten optimiert werden.

Der erfindungsgemäße mehrschichtige Hohlkörper ermöglicht ferner, den besonderen Anforderungen an die Formmassen im Hinblick auf das Schichtdicken-Durchmesser-Verhältnis seitens des zu ihrer Herstellung eingesetzten Coextrusions-Verfahrens Rechnung zu tragen: Schmelzesteifigkeit einerseits; Verweilzeiten; Haftung; kleinvolumige EVOH-Sperrschicht plus kleinvolumige Haftvermittlerschicht plus großvolumige Stützschicht PA (12, 612, etc.).

Figur 1 veranschaulicht die H₂-Permeabilität ausgewählter Polymere und des PA12-EVOH-MLT-Systems.

Figur 2 veranschaulicht den PA12-EVOH-MLT-TCP-Ansatz für 100% H₂-Hochdruck für Offshore-Anwendungen.

Figur 3 veranschaulicht den PA12-EVOH-Gaspipe-Ansatz für 16 beziehungsweise 18 bar MOP für Onshore-Anwendungen.

Figur 4 zeigt einen geschweißten Prüfkörper.

Figur 5 veranschaulicht Zugfestigkeitseigenschaften von geschweißten Proben im Vergleich zu nicht-geschweißten Proben für ein- und mehrschichtige Rohre.

Figur 6 veranschaulicht Untersuchungen der Spülbarkeit eines MLT-Rohrs mit einer inneren EVOH-Sperrschicht.

Die Erfindung betrifft in einem ersten Aspekt einen mehrschichtigen Hohlkörper, insbesondere für den Transport, die Transmission, die Distribution und/oder die Aufbewahrung von Gasen und/oder Flüssigkeiten, der von innen nach außen folgende Schichten aufweist oder aus diesen Schichten besteht:
- gegebenenfalls eine **Schicht I,** welche eine Formmasse enthaltend Polyethylen (PE), Polyvinylidenfluorid (PVDF), Polytetrafluorethylen (PTFE), Perfluoralkoxy (PFA), Poly(tetrafluorethylen-perfluormethylvinylether) (MFA), Fluorethylenpropylen (FEP) und/oder Ethylen-Chlortrifluorethylen (ECTFE) umfasst oder daraus besteht; und vorzugsweise PE-HP, PVDF-HP, PFA-HP, MFA-HP und/oder FEP-HP umfasst oder daraus besteht (HP = high purity);
- gegebenenfalls eine **Schicht II,** welche eine Haftvermittlerschicht ist und eine Formmasse enthaltend PA6, PA612, deren Copolymeren und/oder Mischungen davon umfasst oder daraus besteht;
- eine Sperrschicht **(Schicht III),** welche eine Formmasse enthaltend Ethylen-Vinylalkohol-Copolymer (EVOH) umfasst oder daraus besteht;
- eine Haftvermittlerschicht **(Schicht IV),** welche eine Formmasse enthaltend PA6, PA612, deren Copolymeren und/oder Mischungen davon umfasst oder daraus besteht;
- eine **Schicht V,** welche eine Formmasse enthaltend mindestens ein kettenverlängertes Polyamid umfasst; und vorzugsweise kettenverlängertes PA 12, kettenverlängertes PA 612, kettenverlängertes Bio-PA, deren Copolymeren und/oder Mischungen davon umfasst oder daraus besteht;
- gegebenenfalls eine **Schicht VI,** welche eine Formmasse enthaltend kohlenstofffaserverstärktes PA 12 umfasst oder daraus besteht; und
- gegebenenfalls eine **Schicht VII,** welche eine Schutzummantelung ist.

Der mehrschichtige Hohlkörper ist bevorzugt konfiguriert für den Transport, die Transmission, die Distribution und/oder die Aufbewahrung von Gasen und/oder Flüssigkeiten.

Schicht I oder Schicht II steht in direktem Kontakt mit dem beförderten oder gelagerten Medium, vorzugsweise H₂.

Die Sperrschicht (Schicht III) wirkt als Barriere insbesondere gegen H₂-Permeation. In Abwesenheit der Schichten I und II steht Schicht III in direktem Kontakt mit dem beförderten oder gelagerten Medium, vorzugsweise H₂.

Hochreine (d.h. high purity) Innenschichten zeichnen sich im Medienkontakt dadurch aus, dass die Medien allenfalls marginale Bestandteile ("Extractables") aus der Innenschicht auswaschen können. Ferner sind diese extrem geringen Auswaschungen ("Leach Out") für die hohe Reinheit vom zu transportierenden Medium hinsichtlich dessen Anwendungszweck vernachlässigbar.

Der Fachmensch ist in der Lage, auf einer Fall-zu-Fall-Basis einen noch akzeptablen Grad an Auswaschungen zu ermitteln.

Beispielsweise ist der Fachmensch in der Lage, im Zusammenhang mit einer Brennstoffzelle einen noch akzeptablen Grad an Verunreinigungen im Wasserstoff (H₂) zu ermitteln, welcher die Funktionsfähigkeit der Brennstoffzelle nicht mindert.

Vorzugsweise weist der mehrschichtige Hohlkörper eine Gasdurchlässigkeit (G), bevorzugt Durchlässigkeit von H₂, in einem Temperaturintervall von 20 bis 100 Grad Celsius von höchstens 200 oder höchstens 300 oder höchstens 400 oder höchstens 500 oder höchstens 1000 cm³ / m^{2 ∗} d ^{∗} bar auf, vorzugsweise jeweils bestimmt gemäß DIN 53380, Teil 1.

Vorzugsweise weist die Sperrschicht (Schicht III) eine Gasdurchlässigkeit (G), bevorzugt Durchlässigkeit von H₂, in einem Temperaturintervall von 20 bis 100 Grad Celsius von höchstens 200 oder höchstens 300 oder höchstens 400 oder höchstens 500 oder höchstens 1000 cm³ / m^{2 ∗} d ^{∗} bar auf, vorzugsweise jeweils bestimmt gemäß DIN 53380, Teil 1.

Sofern der erfindungsgemäße Hohlkörper eine Schicht VI aufweist, welche eine Formmasse enthaltend kohlenstofffaserverstärktes PA 12 umfasst oder daraus besteht, handelt es sich hierbei vorzugsweise um unidirektional (UD) faserverstärkte Endlosbänder, welche bevorzugt einen Anteil an Kohlenstofffasern von 40 bis 50 Volumen-% und einen Anteil an niederviskosem PA 12 von 40-60 Volumen-% aufweisen. Besonders bevorzugt weisen diese unidirektional faserverstärkten Endlosbänder einen Anteil an Kohlenstofffasern von ca. 45 Volumen-% und einen Anteil an niederviskosem PA 12 von ca. 55 Volumen-% auf. Die Kohlenstofffasem haben bevorzugt einen Durchmesser von 4-15 µ, besonders bevorzugt von 7-12 µ. Das PA 12 hat bevorzugt eine SchmelzViskosität im Bereich von 10 bis 100 Pa s, gemessen mit einem Anton-Paar Rheometer vom Typ MCR 502 mit Platte-Platte System (Plattenabstand d=25mm), mit einer Kreisfrequenz von 1000/Minute, bei einer Temperatur von 280°C.

Vorzugsweise beträgt die (Wand-)Dicke der Schicht III
- mindestens 0,2 mm oder mindestens 0,3 mm oder mindestens 0,4 mm oder mindestens 0,5 mm; und/oder
- höchstens 0,6 mm oder höchstens 0,7 mm oder höchstens 0,8 mm oder höchstens 0,9 mm oder höchstens 1,0 mm.

Vorzugsweise beträgt die (Wand-)Dicke der Schicht IV
- mindestens 0,1 mm oder mindestens 0,12 mm oder mindestens 0,15 mm oder mindestens 0,17 mm; und/oder
- höchstens 0,2 mm oder höchstens 0,22 mm oder höchstens 0,24 mm oder höchstens 0,30 mm oder höchstens 0,5 mm.

Vorzugsweise beträgt die (Wand-)Dicke der Schicht V
- mindestens 5,0 mm oder mindestens 6,0 mm oder mindestens 7,0 mm oder mindestens 8,0 mm oder mindestens 9,0 mm; und/oder
- höchstens 10,0 mm oder höchstens 11,0 mm oder höchstens 12,0 mm oder höchstens 13,0 mm oder höchstens 15,0 mm.

Methoden zur Ermittlung geeigneter (Wand-)Dicken sind dem Fachmensch bekannt, z.B. die Berechnung mit Hilfe der "Kesselformel".

Vorzugsweise werden die (Wand-)Dicken gemäß der Norm DIN EN 13480-3:2017-12 bestimmt.

Vorzugsweise beträgt der Innendurchmesser (d.h. Durchmesser ohne Berücksichtigung der Schichten) des erfindungsgemäßen mehrschichtigen Hohlkörpers, insbesondere des Onshore- und/oder Offshore-Rohrs, mindestens 30 mm oder mindestens 50 mm und/oder höchstens 160 mm oder höchstens 300 mm oder höchstens 350 mm.

Der erfindungsgemäße mehrschichtige Hohlkörper kann in unterschiedlichen Schichten gleiche oder unterschiedliche Polyamide (PA) aufweisen. Derartige Polyamide sowie die zu ihrer Bezeichnung verwendeten Abkürzungen sind dem Fachmensch bekannt.

Ein im Sinne der Erfindung insbesondere geeignetes Polyamid ist auf Basis von Lactamen, Aminocarbonsäuren (Perlon-Typ), Diaminen bzw. Dicarbonsäuren aufgebaut (Nylon-Typ). Es kann darüber hinaus verzweigend wirkende Bausteine enthalten, die beispielsweise von Tricarbonsäuren, Triaminen oder Polyethylenimin abgeleitet sind. Geeignete Typen sind, jeweils als Homopolymer oder als Copolymer, beispielsweise PA 6, PA 46, PA 66, PA 610, PA 66/6, PA 6/6T, PA 66/6T sowie insbesondere PA 612, PA 1010, PA 1012, PA 1212, PA 613, PA 1014, PA 11, PA 12 oder ein transparentes Polyamid.

Bei transparenten Polyamiden kommen beispielsweise in Frage:
- das Polyamid aus Terephthalsäure und dem Isomerengemisch aus 2.2.4- und 2.4.4-Trimethylhexamethylendiamin,
- das Polyamid aus Isophthalsäure und 1.6-Hexamethylendiamin,
- das Copolyamid aus einem Gemisch aus Terephthalsäure/Isophthalsäure und 1.6-Hexamethylendiamin,
- das Copolyamid aus Isophthalsäure, 3.3'-Dimethyl-4.4'-diaminodicyclohexylmethan und Laurinlactam oder Caprolactam,
- das (Co)Polyamid aus 1.12-Dodecandisäure, 3.3'-Dimethyl-4.4'-diaminodicyclohexylmethan und gegebenenfalls Laurinlactam oder Caprolactam,
- das Copolyamid aus Isophthalsäure, 4.4'-Diaminodicyclohexylmethan und Laurinlactam oder Caprolactam,
- das Polyamid aus 1.12-Dodecandisäure und 4.4'-Diaminodicyclohexylmethan, und/oder
- das Copolyamid aus einem Terephthalsäure/Isophthalsäure-Gemisch, 3.3'-Dimethyl-4.4'-diaminodicyclohexylmethan und Laurinlactam.

Weiterhin sind Polyetheramide auf der Basis von Lactamen, Aminocarbonsäuren, Diaminen, Dicarbonsäuren und Polyetherdiaminen und/oder Polyetherdiolen geeignet.

PA 6 wird bevorzugt durch ringöffnende Polymerisation von Caprolactam hergestellt.

PA 11 wird bevorzugt durch Polykondensation von ω-Aminoundecansäure hergestellt, während PA 12 durch ringöffnende Polymerisation von Laurinlactam erhalten wird. Beide Polymere sind in einer Vielzahl von Typen im Handel erhältlich.

PA610 wird bevorzugt auf bekannte Weise durch Polykondensation einer äquivalenten Mischung aus Hexamethylendiamin und 1.10-Decandisäure hergestellt, während PA 612 bevorzugt auf bekannte Weise durch Polykondensation einer äquivalenten Mischung aus Hexamethylendiamin und 1.12-Dodecandisäure und PA 1010 bevorzugt auf ebenso bekannte Weise durch Polykondensation einer äquivalenten Mischung aus 1.10-Decandiamin und 1.10-Decandisäure hergestellt wird.

PA 1012 wird bevorzugt durch Polykondensation einer äquivalenten Mischung aus 1.10-Decandiamin und 1.12-Dodecandisäure hergestellt, während PA 1212 auf gleiche Weise aus 1.12-Dodecandiamin und 1.12-Dodecandisäure erhalten wird.

PA 66 wird bevorzugt durch Polykondensation von Hexamethylendiamin und Adipinsäure hergestellt. Es ist genauso wie PA6 in einer Vielzahl von Typen handelsüblich.

PA 6/66 ist ein Copolykondensat ausgehend von den Monomeren Caprolactam, Hexamethylendiamin und Adipinsäure.

Bevorzugt werden Mischungen verschiedener Polyamide eingesetzt werden, z. B. PA 12/PA 1012 oder PA 12/PA 1212. Derartige Mischungen zeichnen sich durch eine besonders hohe Tieftemperaturschlagzähigkeit aus; sie sind beispielsweise in der EP-A-0 388 583 beschrieben.

Bio-PA ist ein Polyamid auf Basis nachwachsender Rohstoffe. Die Monomere werden bevorzugt ganz oder teilweise aus Rizinusöl gewonnen.

Bevorzugt enthält mindestens eine Schicht ein Polyamin-Polyamid-Copolymer.

Das Polyamin-Polyamid-Copolymer wird bevorzugt unter Verwendung folgender Monomere hergestellt:
a) 0,5 bis 25 Gew.-%, bevorzugt 1 bis 20 Gew.-% und besonders bevorzugt 1,5 bis 16 Gew.-%, bezogen auf das Polyamin-Polyamid-Copolymer, eines Polyamins mit mindestens 4, bevorzugt mindestens 8 und besonders bevorzugt mindestens 11 Stickstoffatomen und einem zahlenmittleren Molekulargewicht Mn von mindestens 146 g/mol, bevorzugt von mindestens 500 g/mol und besonders bevorzugt von mindestens 800 g/mol, sowie
b) polyamidbildende Monomere, ausgewählt aus Lactamen, ω-Aminocarbonsäuren und/oder äquimolaren Kombinationen von Diamin und Dicarbonsäure.

In einer bevorzugten Ausführungsform liegt die Aminogruppenkonzentration des Polyamin-Polyamid-Copolymers im Bereich von 100 bis 2500 mmol/kg.

Diese und weitere geeignete Polyamin-Polyamid-Copolymere und Methoden zu ihrer Herstellung sind dem Fachmensch z.B. aus der Veröffentlichung EP-A-3 299 165 bekannt.

In einer bevorzugten Ausführungsform enthält der mehrschichtige Hohlkörper die Schicht I nicht oder die Schicht I und die Schicht II nicht und Schicht III ist Sperr- und Innenschicht zugleich.

Schicht V umfasst eine Formmasse enthaltend mindestens ein kettenverlängertes Polyamid.

Beispielhafte Verfahren zur Kettenverlängerung werden im Folgenden definiert.

In einer bevorzugten Ausführungsform ist die Formmasse der Schicht V erhältlich durch Aufkondensierung einer PA12-, PA612- und/oder Bio-PA-Formmasse mit einer Verbindung mit mindestens zwei Carbonateinheiten und der Polyamidanteil der PA12-, PA612- und/oder Bio-PA-Formmasse enthält herstellungsbedingt mindestens 5 ppm Phosphor in Form einer sauren Verbindung, wobei
a) dem Polyamid vor der Compoundierung oder bei der Compoundierung 0,001 bis 10 Gew.-%, bezogen auf das Polyamid, eines Salzes einer schwachen Säure zugegeben wird, und
b) eine Mischung des fertigen Compounds und 0,005 bis 10 Gew-%, bezogen auf das Polyamid, der Verbindung mit mindestens zwei Carbonateinheiten hergestellt wird.

In einer bevorzugten Ausführungsform
- enthält der Polyamidanteil 20 bis 500 ppm Phosphor in Form einer sauren Verbindung; und/oder
- wird dem Polyamid 0,001 bis 5 Gew.-%, bevorzugt 0,01 bis 2,5 Gew.-%, besonders bevorzugt 0,05 bis 1 Gew.-%, eines Salzes einer schwachen Säure zugegeben und die schwache Säure besitzt bevorzugt einen pKa-Wert von 2,5 oder höher und/oder das Salz der schwachen Säure ist bevorzugt ein Alkalimetallsalz, ein Erdalkalimetallsalz, das Salz eines Metalls der III. Hauptgruppe, das Salz eines Metalls der II. Nebengruppe oder ein Ammoniumsalz; und/oder
- wurde das Polyamid unter Verwendung eines Diamins oder Polyamins als Regler hergestellt; und/oder
- wird die Verbindung mit mindestens zwei Carbonateinheiten als Masterbatch eingesetzt.

Dem Fachmenschen ist bekannt, wie die Termini von Polyamiden definiert synthetisiert werden können. Dies geschieht mit sogenannten Reglern. Im Falle von Polyamiden des Nylontyps kann dies ein schlichter stöchiometrischer Überschuss einer der beiden Komponenten sein. Oder es wird ein sogenannter externer Regler zugesetzt, dies kann für beide Polyamidtypen (Perlon und Nylon) durchgeführt werden. Diese Regler können z.B. im Sinne der Polyamidbildung Diamine oder Disäuren sein.

Grundsätzlich sind dem Fachmenschen die Bestimmungsmethoden der Endgruppen von Polyamiden bekannt. Bevorzugt wird die Bestimmung der Carboxylendgruppen durch Lösen des Polymers in Benzylalkohol und alkalimetrische Titration mit alkoholischer KOH (0,1 mol/l Maßlösung) gegen Phenolphthalein durchgeführt. Bevorzugt erfolgt die Bestimmung der Aminoendgruppen in m-Kresol durch Lösen des Polyamides bei erhöhter Temperatur. Die Endpunktanzeige erfolgt potentiometrisch.

Sofern das Polyamid unter Verwendung eines Diamins oder Polyamins hergestellt wurde, weist kann es mit einem Überschuss an Aminoendgruppen erhalten werden. Die Amino-Endgruppenkonzentrationen kann bevorzugt mittels einer potentiometrischen Titration bestimmt werden. Für die Amino-Endgruppen werden hierzu beispielsweise 0,2 bis 1,0 g Polyamid in einem Gemisch aus 50 ml m-Kresol und 25 ml Isopropanol bei 50 bis 90 °C gelöst und nach Zusatz von Aminocapronsäure mit einer 0,05-molaren Perchlorsäurelösung titriert.

Diese und weitere Möglichkeiten der Herstellung kettenverlängerter Polyamide sind dem Fachmensch aus der Veröffentlichung EP 1 690 890 A1 bekannt.

In einer bevorzugten Ausführungsform enthält die Formmasse der Schicht V einen Viskositätsmodifikator (d.h. ein Additiv), welcher bei der thermoplastischen Verarbeitung zu einem Molekulargewichtsaufbau durch Kettenverlängerung von Polyamidmolekülen führt. Eine bevorzugte Variante eines Viskositätsmodifikators ist ein Polycarbonat in einem säureterminierten Polyamid. Ein solcher Viskositätsmodifikator ist beispielsweise unter der Bezeichnung Brüggolen^{®} M 1251 (Warenzeichen der Brüggemann GmbH & Col KG, Deutschland) von der Firma Brüggemann Chemical (Deutschland) im Handel erhältlich, wobei es sich um ein Masterbatch aus einem niedrigviskosen Polycarbonat in einem säureterminierten Polyamid 6 handelt.

Derartige Brüggolene^{®} sind in der Lage, während einer Extrusion mit amingeregeltem Polyamid, z.B. amingeregeltem PA12, zu reagieren, so dass die Polymerkette verlängert wird und die Molmasse zunimmt.

Bei der Umsetzung eines amingeregelten Polyamids, z.B. von amingeregeltem PA12, mit einem Brüggolen^{®}, z.B. Brüggolen^{®} M 1251, beträgt der Anteil des Brüggolens^{®} vorzugsweise weniger als 2 Gew.-%, bezogen auf das Gesamtgewicht des amingeregelten Polyamids und des Brüggolens^{®}.

In einer bevorzugten Ausführungsform enthält die Formmasse der Schicht V kettenverlängertes PA der folgenden Formeln oder besteht daraus: 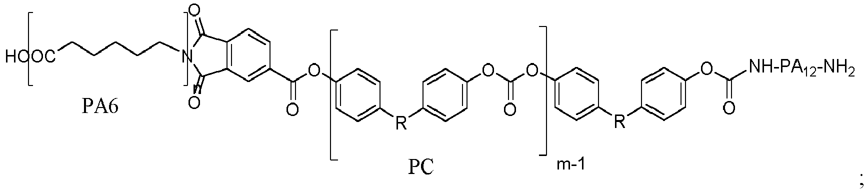 und/oder

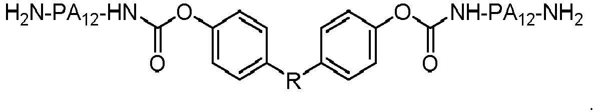

Weitere Verfahren zur Kettenverlängerung sind dem Fachmensch aus den Veröffentlichungen WO 2000/066650, EP 2 687 554 A1 und EP 2 610 279 A1 bekannt.

In einer bevorzugten Ausführungsform wird den Polyamiden, insbesondere den Polyamiden der Schicht V, ein kettenverlängerndes Additiv zugesetzt, wie Carbonyl-bis-caprolactam (CBC), N-N'-Terephthaloyl-bis-caprolactam, Bisoxazoline, Diisocyanate, verkappte Diisocyanate, Carbodiimide, epoxy-funktionalisierte 5 Oligo- oder Polymere oder auf Carbonateinheiten basierende Additive.

Die bevorzugten kettenverlängernden Additive weisen mindestens 2 Carbonateinheiten pro Molekül auf, bevorzugt 5, mehr bevorzugt 10, weiter mehr bevorzugt 20, besonders bevorzugt 30 mehr besonders bevorzugt 40 und insbesondere bevorzugt mindestens 50 Carbonateinheiten pro Molekül.

Besonders bevorzugte kettenverlängernde Additive sind in WO 2000/066650 offenbart, insbesondere bevorzugt sind kettenverlängernde Additive wie Blockcopolymere der Formel PA.PC, wobei PA Polyamid und PC Polycarbonat bedeutet.

Das Polycarbonat weist mindestens 2 Carbonateinheiten auf, bevorzugt 10, mehr bevorzugt 20, weiter bevorzugt 30, besonders bevorzugt 40 und insbesondere mindestens 50. Bevorzugt weist das Polycarbonat 2 bis 100, besonders bevorzugt 30 bis 80 und insbesondere bevorzugt 40 bis 70 Carbonateinheiten auf.

Der Kettenverlängerer liegt in einem Materbatch aus säureterminiertem Polyamid vor und wird mit einem aminterminiertem Polyamin umgesetzt.

Das kettenverlängernde Additiv weist bevorzugt 25 bis 75 Gew.-%, mehr bevorzugt 35 bis 65 Gew-% und insbesondere bevorzugt 45 bis 55 Gew.-% an Polycarbonat auf.

Solche Verfahren zur Kettenverlängerung von Polyamiden sind dem Fachmensch aus den Veröffentlichungen EP 1 690 890 A1, WO 01/53382 A1 und WO 01/66643 A1 bekannt.

In einer bevorzugten Ausführungsform folgen
- die Schichten I, II, III, IV und V, oder
- die Schichten I, II, III, IV, V, VI und VII, oder
- die Schichten III, IV und V, oder
- die Schichten III, IV, V, VI und VII
   direkt aufeinander; und/oder
- ist die Schicht III außermittig angeordnet.

Erfindungsgemäß bedeutet "außermittig angeordnet", dass ausgehend von der außermittig angeordneten Schicht die Anzahl der Schichten nach innen, d.h. zum transportierten Medium hin, nicht der Anzahl der Schichten nach außen entspricht. Erfindungsgemäß können somit auch mehrere Schichten eines mehrschichtigen Hohlkörpers außermittig angeordnet sein.

In einer bevorzugten Ausführungsform enthält die Formmasse der Schicht V
- zusätzliche Polyamide, deren Copolymeren und/oder Mischungen davon,
- vorzugsweise PA 8, PA 9, PA 10, PA 11, PA 12, PA 4.6, PA 6.10, PA 6.12, PA 6.13, PA 6.14, PA 6.16, PA 8.10, PA 8.13, PA 9.10, PA 9.12, PA 10.10, PA 10.12, PA 10.14, PA 10.16, PA 10.18, PA 12.12, PA DACH.6 (Diaminocyclohexan), PA DACH.10, PA DACH.12, PA DACH.10/11, PA PACM.6 (4,4-Diaminodicyclohexylmethan), PA PACM.10, PA PACM.12, PA MACM.6 (3,3'-Dimethyl-4,4'-diaminocyclohexylmethan), PA MACM.10, PA MACM.12,. PA 6.T (T = Terephthalsäure), PA 9.T, PA 10.T, PA 12.T, PA 6.I (I = Isophthalsäure), PA 9.I, PA 10.I, PA 12.I, PA 6.N (2,6-Naphthalindicarbonsäure), PA 10.N, PA 12.N, PA MXD.6 (MXD = meta-Xyloldiamin), PA MXD.10, PA MXD.12, PA IPD.6 (Isophorondiamin), PA IPD.10, PA IPD.12, PA IND.6 (Isononyldiamin, 1,6-Diamino-2,4,4-trimethylhexan), PA IND.10, PA IND.12, PA ND.6 (Nonyldiamin, 1,6-Diamino-2,2,4-trimethylhexan), PA ND.10, PA ND.12, deren Copolymeren und/oder Mischungen davon.

In einer bevorzugten Ausführungsform
- enthält die Formmasse der Schicht I PE-HP, PVDF-HP, PFA-HP, MFA-HP und/oder FEP-HP, jeweils einzeln oder insgesamt in einer Menge von mindestens 80 Gew.-%, bevorzugt mindestens 85 Gew.-% und insbesondere bevorzugt mindestens 90 Gew.-%, jeweils bezogen auf das Gesamtgewicht der Schicht I und/oder der Formmasse der Schicht I; und/oder
- enthält die Formmasse der Schicht V kettenverlängertes PA 12, kettenverlängertes PA 612, kettenverlängertes Bio-PA, deren Copolymere und/oder Mischungen davon, jeweils einzeln oder insgesamt in einer Menge von mindestens 50 Gew.-%, bevorzugt mindestens 60 Gew.-%, besonders bevorzugt mindestens 65 Gew.-% und insbesondere bevorzugt mindestens 70 Gew.-%, jeweils bezogen auf das Gesamtgewicht der Schicht V und/oder der Formmasse der Schicht V.

In einer bevorzugten Ausführungsform schließen sich nach außen hin eine weitere Außenschicht (Schicht VIII), ggfs. noch eine weitere Außenschicht (Schicht IX), ggfs. noch eine weitere Außenschicht (Schicht X) und ggfs. noch weitere Außenschichten an, die jeweils unabhängig voneinander eine Formmasse vorzugsweise enthaltend Polyamide, deren Copolymeren und/oder Mischungen davon umfassen.

In einer bevorzugten Ausführungsform ist der mehrschichtige Hohlkörper wickelbar, insbesondere in industrierelevanten Durchmessern wickelbar, und ist vorzugsweise ein wickelbares Rohr.

In einer bevorzugten Ausführungsform ist der Hohlkörper drei-, vier-, fünf-, sechs- oder siebenschichtig.

Der erfindungsgemäße Hohlkörper kann insbesondere in fünf Schichten ausgeführt werden, sollte eine zusätzliche Kapselung der Sperrschicht notwendig sein. Unter der Kapselung wird ein Schutz vor Auswaschungen und anderen Migrationsbewegungen von Substanzen in das umgebende und/oder geführte Medium verstanden.

In einer bevorzugten Ausführungsform ist der mehrschichtige Hohlkörper
- ein Hohlprofil, vorzugsweise ein Rohr oder ein Behälter; und/oder
- eine Komponente eines kraftstoffführenden Systems; und/oder
- ein Gasleitungsrohr; und/oder
- ein Onshore- und/oder Offshore-Rohr oder zumindest ein Teilstück davon.

Vorzugsweise ist der erfindungsgemäße mehrschichtige Hohlkörper weder Bremsleitung, noch Kupplungsleitung, noch Kühlflüssigkeitsleitung, noch Kabelkanal, noch Tankstellenversorgungsleitung, noch Belüftungsleitung, noch Luftansaugrohr.

Vorzugsweise ist der erfindungsgemäße mehrschichtige Hohlkörper kein Bestandteil eines Automobils.

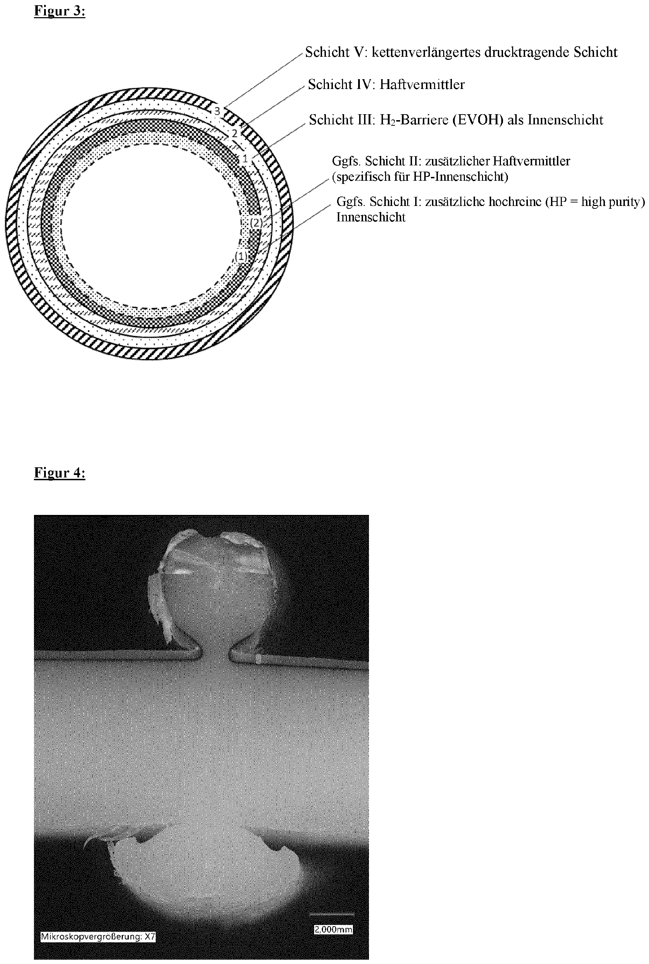

In einer bevorzugten Ausführungsform enthält der mehrschichtige Hohlkörper die Schicht I und die Schicht II oder enthält diese Schichten nicht und Schicht III ist Sperr- und Innenschicht, ist Schicht IV eine Formmasse, welche PA6 und PA612 umfasst oder beinhaltet, ist Schicht V eine Formmasse, welche kettenverlängertes PA 12 umfasst oder beinhaltet, schließen sich nach außen hin keine zusätzlichen Außenschichten an, und folgen die Schichten I, II, sofern vorhanden, III, IV und V direkt aufeinander (siehe Figur 3). Dieser mehrschichtige Hohlkörper ist ein Onshore-Rohr und ist dadurch gekennzeichnet, dass er sich mit gängigen Methoden Verschweißen lässt, insbesondere durch Spiegelschweißen und/oder Muffenschweißen.

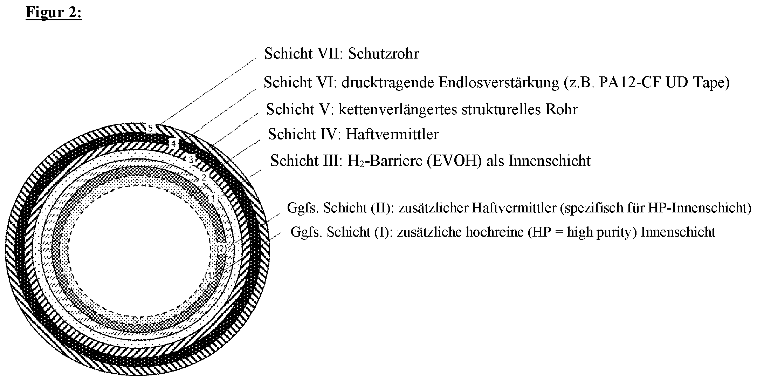

In einer bevorzugten Ausführungsform enthält der mehrschichtige Hohlkörper die Schicht I und die Schicht II oder enthält diese Schichten nicht und Schicht III ist Sperr- und Innenschicht, ist Schicht IV eine Formmasse, welche PA6 und PA612 umfasst oder beinhaltet, ist Schicht V eine Formmasse, welche kettenverlängertes PA 12 umfasst oder beinhaltet, schließt sich nach außen hin eine zweite Außenschicht (Schicht VI) an, welche eine Formmasse ist, die kohlenstofffaserverstärktes PA 12 umfasst oder beinhaltet, schließt sich nach außen hin eine dritte Außenschicht (Schicht VII) an, welche eine Schutzummantelung ist, und folgen die Schichten I, II, sofern vorhanden, III, IV, V, VI und VII direkt aufeinander (siehe Figur 2). Dieser mehrschichtige Hohlkörper ist ein Offshore-Rohr und ist dadurch gekennzeichnet, dass er sich mit gängigen Methoden Verschweißen lässt, insbesondere durch Spiegelschweißen und/oder Muffen-schweißen.

Der Fachmensch versteht, dass - sofern der erfindungsgemäße mehrschichtige Hohlkörper eine Schicht VI aufweist, welche eine Formmasse enthaltend kohlenstofffaserverstärktes PA 12 in Form von unidirektional endlosfaserverstärkten Bändern umfasst, die resultierenden Hohlkörper durch Muffen-schweißen, nicht aber durch Spiegelschweißen verschweißt werden können.

In einer besonders bevorzugten Ausführungsform ist der mehrschichtige Hohlkörper ein drei- oder fünfschichtiges kettenverlängertes PA-Mehrschichtrohr (d.h. ein Mehrschichtrohr, welches kettenverlängertes Polyamid enthält) mit Barrierewirkung gegen H₂-Permeation oder zumindest ein Teil dieses Rohres, jeweils konfiguriert für Offshore- und/oder Onshore-Anwendungen.

In einer besonders bevorzugten Ausführungsform ist der mehrschichtige Hohlkörper ein Offshore-Rohr, welches Schichten in exakt der Zusammensetzung und Anordnung gemäß Figur 2 enthält oder daraus besteht.

In einer besonders bevorzugten Ausführungsform ist der mehrschichtige Hohlkörper ein Onshore-Rohr, welches Schichten in exakt der Zusammensetzung und Anordnung gemäß Figur 3 enthält oder daraus besteht.

In einer bevorzugten Ausführungsform enthält der mehrschichtige Hohlkörper, insbesondere das Offshore-Rohr und/oder Onshore-Rohr, einen Stahlanteil von höchstens 20 Gew.-%, höchstens 10 Gew.-%, oder höchstens 5 Gew.-%, jeweils bezogen auf das Gesamtgewicht des Hohlkörpers; vorzugsweise enthält der mehrschichtige Hohlkörper, insbesondere das Offshore-Rohr und/oder Onshore-Rohr, keinen Stahl.

In einer bevorzugten Ausführungsform beinhaltet Schicht I und/oder Schicht II und/oder Schicht III und/oder Schicht IV und/oder Schicht V und/oder Schicht VI und/oder Schicht VII die jeweilige Formmasse. Die Begriffe "Schicht" und "Formmasse" können dann synonym verwendet werden.

Die erfindungsgemäß verwendeten Polyamidformmassen enthalten neben den beschriebenen Polymerkomponenten gegebenenfalls weitere Zusätze. Diese weiteren Zusätze sind, unter Berücksichtigung der weiter unten genannten Definitionen, beispielsweise:
a) Stabilisatoren,
b) zusätzliche Polymere,
c) Schlagzäh-Modifizierer,
d) Weichmacher,
e) Pigmente und/oder Farbstoffe,
f) Zusätze, die die elektrische Leitfähigkeit erhöhen, und
g) Verarbeitungshilfsmittel.

### Insbesondere bevorzugt kommen

Stabilisatoren in einer Menge von bis 2 Gew.-%, vorzugsweise bis 1,5 Gew.-% und besonders bevorzugt bis 1,2 Gew.-% zum Einsatz und/oder
Pigmente in einer Menge von bis 1,5 Gew.-%, vorzugsweise bis 1,2 Gew.-% und besonders bevorzugt von 0,1 bis 1 Gew.-% und/oder
Schlagzäh-Modifizierer in einer Menge von bis zu 10 Gew.-%, vorzugsweise bis zu 9 Gew.-% und besonders bevorzugt bis zu 8 Gew.-& zum Einsatz.

In einer bevorzugten Ausführungsform enthalten die Formmassen eine wirksame Menge eines Oxidationsstabilisators und besonders bevorzugt eine wirksame Menge eines Oxidationsstabilisators in Kombination mit der wirksamen Menge eines kupferhaltigen Stabilisators. Geeignete Oxidationsstabilisatoren sind beispielweise aromatische Amine, sterisch gehinderte Phenole, Phosphite, Phosphonite, Thiosynergisten, Hydroxylamine, Benzofuranonderivate, acryloylmodifizierte Phenole etc. Derartige Oxidationsstabilisatoren sind in einer Vielzahl von Typen kommerziell erhältlich, beispielsweise unter den Handelsnamen Naugard 445, Irganox 1010, Irganox 1098, Irgafos 168, P-EPQ oder Lowinox DSTDP. Im Allgemeinen enthalten die Formmassen etwa 0,01 bis etwa 2 Gew.-% und bevorzugt etwa 0,1 bis etwa 1,5 Gew.-% eines Oxidationsstabilisators.

Darüber hinaus können die Formmassen auch einen UV-Stabilisator bzw. einen Lichtstabilisator vom HALS-Typ enthalten. Geeignete UV-Stabilisatoren sind in erster Linie organische UV-Absorber, beispielsweise Benzophenonderivate, Benzotriazolderivate, Oxalanilide oder Phenyltriazine. Lichtstabilisatoren vom HALS-Typ sind Tetramethylpiperidinderivate; es handelt sich hier um Inhibitoren, die als Radikalfänger wirken. UV-Stabilisatoren und Lichtstabilisatoren können vorteilhaft in Kombination eingesetzt werden. Beide sind in einer Vielzahl von Typen kommerziell erhältlich; hinsichtlich der Dosierung kann den Herstellerangaben gefolgt werden.

Die Formmassen können zusätzlich einen Hydrolysestabilisator enthalten wie etwa ein monomeres, oligomeres oder polymeres Carbodiimid oder ein Bisoxazolin.

Andere Polymere, die als Zusatz in den Formmassen enthalten sein können, sind beispielsweise Polyetheramide oder Polytetrafluorethylen (PTFE).

Schlagzähmachende Kautschuke für Polyamidformmassen sind Stand der Technik. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Derartige Kautschuke können auch zusammen mit einem unfunktionalisierten Polyolefin wie z. B. isotaktischem Polypropylen eingesetzt werden, wie in der EP-A-0 683 210 beschrieben.

Weichmacher und ihr Einsatz bei Polyamiden sind dem Fachmensch bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen unter anderem p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid in Frage.

Geeignete Pigmente und/oder Farbstoffe sind beispielsweise Ruß, Eisenoxid, Zinksulfid, Ultramarin, Nigrosin, Perlglanzpigmente und Metallflitter.

Zusätze, die die elektrische Leitfähigkeit erhöhen, sind beispielsweise Leitfähigkeitsruß oder Carbon Nanotubes.

Geeignete Verarbeitungshilfsmittel sind beispielsweise Paraffine, Fettalkohole, Fettsäureamide, Stearate wie Calciumstearat, Paraffinwachse, Montanate oder Polysiloxane.

Die jeweilige Formmasse wird aus den einzelnen Bestandteilen auf dem Fachmensch bekannte Weise durch Mischen in der Schmelze hergestellt.

Das EVOH der Sperrschicht (Schicht III) ist ein Copolymer aus Ethylen und Vinylalkohol. Der Ethylengehalt im Copolymeren beträgt in der Regel 24 bis 44 Mol-%, vorzugsweise 27 bis 38 Mol-% und besonders bevorzugt 30 bis 35 Mol-%. Eine Vielzahl von Typen ist im Handel erhältlich. Die Formmasse kann neben dem EVOH gemäß dem Stand der Technik weitere Zusätze enthalten, wie sie für Sperrschichtanwendungen üblich sind. Derartige Zusätze sind in der Regel Know-How des EVOH-Lieferanten.

In einer bevorzugten Ausführungsform enthält ausschließlich die Sperrschicht (Schicht III) EVOH.

In einer bevorzugten Ausführungsform enthält ausschließlich die Sperrschicht (Schicht III) EVOH und besteht daraus (100 Gew.-% EVOH).

EVOH-Sperrschichten sind dem Fachmensch aus der Veröffentlichung EP 1 216 826 B1 bekannt.

Bei der Verwendung des erfindungsgemäßen mehrschichtigen Hohlkörpers zur Leitung oder Bevorratung von brennbaren Flüssigkeiten, Gasen oder Stäuben, wie z. B. Kraftstoff oder Kraftstoffdämpfen, empfiehlt es sich, mindestens eine der zum Verbund gehörenden Schichten elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlenstofffasem (auch metallisiert), intrinsisch leitfähige Polymere oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen spezifischen Oberflächenwiderstand von maximal 10 ⁹ Ω/square und vorzugsweise maximal 10 ⁶ Ω/square. Die Messmethode zur Bestimmung des Widerstands von mehrschichtigen Rohren ist in der SAE J 2260 vom November 2004 erläutert. In diesem Fall ist entweder die entsprechende Schicht als Ganzes elektrisch leitfähig ausgerüstet oder die sie besteht aus zwei Subschichten, von denen die eine elektrisch leitfähig und die andere nicht elektrisch leitfähig ausgerüstet ist. Mehr bevorzugt ist die elektrische leitfähige innerste Schicht die Schicht 1.

Bei der Ausführung des erfindungsgemäßen mehrschichtigen Hohlkörpers als Hohlprofil (z. B. Rohr) oder Behälter kann dieser noch mit einer zusätzlichen Elastomerschicht ummantelt sein. Zur Ummantelung eignen sich sowohl vernetzende Kautschukmassen als auch thermoplastische Elastomere. Die Ummantelung kann sowohl mit als auch ohne Verwendung eines zusätzlichen Haftvermittlers auf den mehrschichtigen Hohlkörper bzw. Teile aufgebracht werden, beispielsweise mittels Coextrusion, Extrusion über einen Querspritzkopf oder dadurch, dass ein vorgefertigter Elastomerschlauch über das fertig extrudierte Mehrschichtrohr geschoben wird. In der Regel besitzt die Ummantelung eine Dicke von 0,1 bis 4 mm und bevorzugt von 0,2 bis 3 mm.

Geeignete Elastomere sind beispielsweise Chloroprenkautschuk, Ethylen/Propylen-Kautschuk (EPM), Ethylen/Propylen/Dien-Kautschuk (EPDM), Epichlorhydrinkautschuk (ECO), chloriertes Polyethylen, Acrylatkautschuk, chlorsulfoniertes Polyethylen, Siliconkautschuk, weichgemachtes PVC, Polyetheresteramide oder Polyetheramide.

Die Fertigung des mehrschichtigen Hohlkörpers kann ein- oder mehrstufig erfolgen, beispielsweise mittels einstufiger Verfahren auf dem Wege des Mehrkomponentenspritzgusses, der Coextrusion, des Coextrusionsblasformens (beispielsweise auch 3D-Blasformen, Schlauchextrusion in eine geöffnete Formhälfte, 3D-Schlauchmanipulation, Saugblasformen, 3D-Saugblasformen, sequentielles Blasformen) oder mittels mehrstufiger Verfahren, wie z. B. in der US 5,554,425 beschrieben. Sofern der erfindungsgemäße mehrschichtige Hohlkörper eine Schicht VI aufweist, welche eine Formmasse enthaltend kohlenstofffaserverstärktes PA 12 umfasst, insbesondere in Form von unidirektional endlosfaserverstärkten Bändern dann erfolgt nach der Extrusion zunächst eine Wicklung sowie eine nachgelagerte Extrusion.

Die Erfindung betrifft in einem zweiten Aspekt die Verwendung des erfindungsgemäßen mehrschichtigen Hohlkörpers
- als Hohlprofil, vorzugsweise als Rohr oder als Behälter; und/oder
- als Komponente eines kraftstoffführenden Systems; und/oder
- als Gasleitungsrohr; und/oder
- als Onshore- und/oder Offshore-Rohr oder zumindest als ein Teilstück davon.

Vorzugsweise wird der erfindungsgemäße mehrschichtige Hohlkörper nicht als Bremsleitung, als Kupplungsleitung, als Kühlflüssigkeitsleitung, als Kabelkanal, als Tankstellenversorgungsleitung, als Belüftungsleitung und/oder als Luftansaugrohr verwendet.

Vorzugsweise wird der erfindungsgemäße mehrschichtige Hohlkörper nicht in einem Automobil verwendet.

Die Erfindung betrifft in einem dritten Aspekt eine kraftstoffführende Vorrichtung umfassend den erfindungsgemäßen mehrschichtigen Hohlkörper.

Die kraftstoffführende Vorrichtung ist vorzugsweise eine Kraftstoffleitung, ein Kraftstoffbehälter, eine Hydraulikleitung, eine Bremsleitung, eine Kupplungsleitung, eine Kühlflüssigkeitsleitung, ein Liner für starre oder flexible Rohre in der Öl- oder Gasförderindustrie oder eine Leitung eines Umbilicals.

Die Erfindung betrifft in einem vierten Aspekt eine kraftstoffführende Anlage umfassend den erfindungsgemäßen mehrschichtigen Hohlkörper und/oder die erfindungsgemäße Vorrichtung.

Die kraftstoffführende Anlage ist vorzugsweise - eine Onshore-Pipeline, eine Offshore-Pipeline oder eine Kombination davon.

Ein weiteres Beispiel einer erfindungsgemäßen Anlage ist ein schwimmender Windpark, welcher vorzugsweise H₂ direkt auf einer Plattform erzeugt und an Land exportiert.

Der Kraftstoff ist vorzugsweise Wasserstoff (H₂), H₂S, CO₂, CH₄ oder eine Mischung davon, besonders bevorzugt Wasserstoff (H₂).

Sämtliche Definitionen des mehrschichtigen Hohlkörpers gemäß erstem Aspekt der Erfindung sind auch im Zusammenhang mit dem zweiten, dem dritten und dem vierten Aspekt der Erfindung zutreffend.

Die Erfindung soll im nachfolgenden experimentellen Teil beispielhaft erläutert werden.

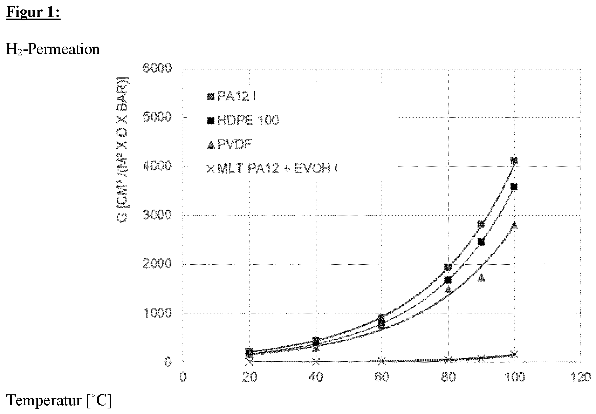

Figur 1 veranschaulicht, dass die H₂-Permeation im erfindungsgemäßen PA12-EVOH-MLT-System gegenüber Monorohren gleicher Dicke anderen aus anderen Polymeren bzw. Polymersystemen drastisch reduziert ist. Auf der y-Achse ist die Gasdurchlässigkeit G aufgetragen.

Die H₂-Permeation wurde folgendermaßen bestimmt: Die Rohre wurden einseitig mit einem Blindflansch verschlossen, welcher über Messanschlüsse für eine permanente Druck- und Temperaturüberwachung verfügt. Nach dem Verschließen der Prüfrohre wurden diese mit dem Prüfgas befüllt und zu Konditionierung für 4-6 Wochen eingelagert. Bei der Konditionierung wird das Rohr so lange mit dem Prüfgas in Kontakt gebracht, bis der Kunststoff vollständig mit dem Prüfgas gesättigt ist und sich eine konstante Permeationsrate eingestellt hat. Nach Abschluss der Konditionierungsphase wurden die Rohre in spezielle Permeationsmesszellen eingespannt und für die Untersuchung vorbereitet. Die Messzellen sind gasdichte Bilanzräume aus Edelstahl, welche das Rohr auf einer Prüflänge von ca. 30 cm umschließen. Die Messzellen selbst sind wiederrum mit zwei Messanschlüssen zur Druck- und Temperaturkontrolle und einem Anschluss zur Probennahme versehen. Die Messzellen wurden zu Beginn der Messung mit Stickstoff gespült und auf einen Überdruck von ca. 100 mbar eingestellt. Das Permeat, welchen die Rohrwand im Bereich der Prüflänge durchdringt, wird in der Messzelle aufgefangen. Während des Untersuchungszeitraums konzentriert sich das Wasserstoffpermeat in der Messzelle auf. In regelmäßigen Abständen wurden den Messzellen Gasproben entnommen und im Prüflabor gaschromatographisch analysiert. Die Gaszusammensetzung (N₂, H₂) gibt Aufschluss über die Menge an Wasserstoff, welche pro Zeiteinheit die Rohrwand durchdrungen hat. Der Konzentrationsanstieg von Wasserstoff in der Messzelle gleicht einer linearen Funktion und spiegelt die Permeationsrate wider. Anhand von mindestens 4 Messpunkte wird die Permeationsrate hinreichend genau bestimmt (Druck und Temperatur konstant). Unter Berücksichtigung der inneren Mantelfläche (Permeationsfläche) und der Partialdrücke (absolut) wird aus der Permeationsrate die Gasdurchlässigkeit G und unter Zuhilfenahme der Wandstärke der Rohre der Permeationskoeffizient (engl. *Permeation Coefficient (PC)*) berechnet. In Versuchen bei Raumtemperatur (ca. 20°C) wurden die Permeationskoeffizienten von Wasserstoff bei verschiedenen Innendrücken bestimmt, wobei die Kunststoffrohre nur in den Dichtungen an den Enden der Permeationszelle gelagert sind (keine Abstützung der Rohr-Mantelflächen).

Durch den Einbau einer EVOH-Sperrschicht kann der Permeationskoeffizient (PC) um bis zu drei Größenordnungen in dem für H₂-Anwendungen relevanten Temperaturbereich (30 °C - 50 °C) reduziert werden.

Figur 2 zeigt ein Offshore-Rohr. Dieses besteht, von innen nach außen, aus folgenden Schichten:
- Schicht I: ggfs. hochreine (HP = high purity) Innenschicht,
- Schicht II: ggfs. zusätzlicher Haftvermittler (spezifisch für HP-Innenschicht),
- Schicht III: H₂-Barriere (EVOH) als Innenschicht,
- Schicht IV: Haftvermittler,
- Schicht V: kettenverlängertes strukturelles Rohr,
- Schicht VI: drucktragende Endlosverstärkung, und
- Schicht VII: Schutzrohr.

Schichten III bis V bilden das MSR als Liner (MSR = Mehrschichtrohrsystem).

Schichten I bis V bilden das HP-MSR als Liner (HP = high purity; MSR = Mehrschichtrohrsystem).

Figur 3 zeigt ein Onshore-Rohr. Dieses besteht, von innen nach außen, aus folgenden Schichten:
- Schicht I: ggfs. hochreine (HP = high purity) Innenschicht,
- Schicht II: ggfs. zusätzlicher Haftvermittler (spezifisch für HP-Innenschicht),
- Schicht III: H₂-Barriere (EVOH) als Innenschicht,
- Schicht IV: Haftvermittler, und
- Schicht V: kettenverlängertes strukturelles Rohr.

Schichten III bis V bilden das MSR als Druckrohr (MSR = Mehrschichtrohrsystem).

Schichten I bis V bilden das HP-MSR als Druckrohr (HP = high purity; MSR = Mehrschichtrohrsystem).

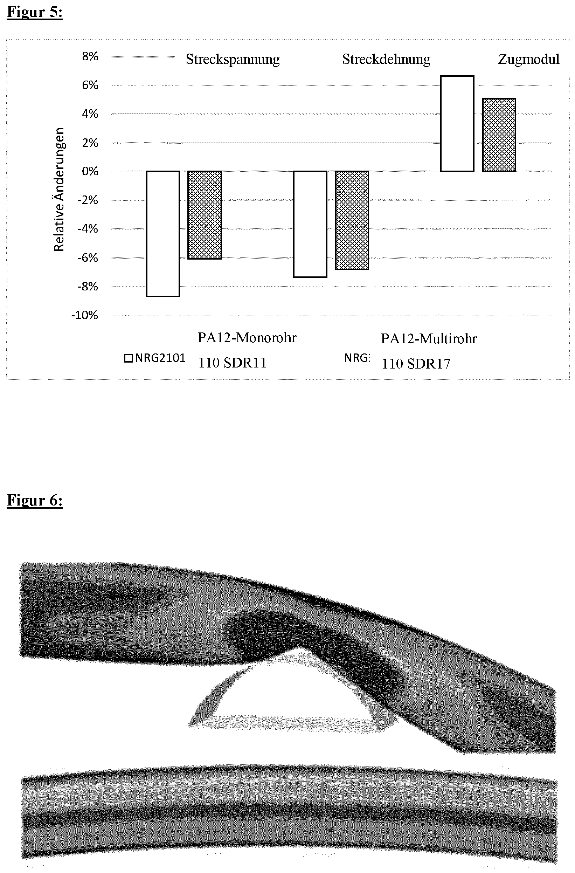

Figuren 4 und 5 betreffen Spiegelschweißen von Onshore-Rohren gemäß Figur 3.

Figur 4 zeigt, dass bei einem intakten geschweißten Prüfkörper optisch kein EVOH-Eintrag in die Schweißnaht zu erkennen ist, d.h. durch das Schweißen wird keine mechanische Schwächung der Schweißnaht verursacht.

Figur 5 zeigt die relative Änderung der Eigenschaften "Streckspannung", "Streckdehnung" und "Modul" von geschweißten Monorohren (weiß) und MLTs (grau), d.h. erfindungsgemäßen Mehrschichtrohrsystemen, zu nicht-geschweißten PA12-Monorohren (0% Referenz). Erfindungsgemäß findet kein EVOH-Eintrag in die Schweißnaht statt. Dadurch kommt es zu keiner nennenswerten Beeinflussung der strukturellen Integrität der Schweißnaht; die Beeinflussung liegt lediglich im Bereich der üblichen Standardabweichung.

Gemäß Figur 6 wurden FEM-Simulationen zur Berechnung des Mindestbiegeradius (MBR) bei 23 °C und einer innersten EVOH-Sperrschicht durchgeführt:

| **Dimension des Rohres** | **PA12 (Außenschicht)** | **EVOH (innerste Schicht)** | **MBR (Simulation)** |
|---|---|---|---|
| OD110 | 6,3 mm | 0,3 mm | 1,85 m |
| SDR17 | 6,6 mm | - | 1,3 m |
| OD110 | 7,2 mm | 0,4 mm | 0,92 m |
| SDR13 | 7,6 mm | - | 0,9 m |
| OD160 | 14,3 mm | 0,3 mm | 1,45 m |
| SDR11 | 14,6 mm | - | 1,3 m |

Es ist zu erwähnen, dass das Versagenskriterium für den MBR ein Ausknicken des Rohres ist. Daher führt ein höherer SDR-Wert / geringere Wanddicke zu einem früheren Knicken. Die hohe Steifigkeit von EVOH (3800 MPa) in Verbindung mit relativ geringer Fließspannung (35 MPa) führt zu einem höheren Risiko des Ausbeulens im Vergleich zu PA12 (1320 & 40 MPa). Für ein 110 SDR17-Rohr würde der MBR 1,85 m betragen, was im Vergleich zu einem einschichtigen Rohr derselben Dimension deutlich größer ist, welches einen MBR von 1,3 m aufweisen würde.

## Patentansprüche

1. Ein mehrschichtiger Hohlkörper für den Transport, die Transmission, die Distribution und/oder die Aufbewahrung von Gasen und/oder Flüssigkeiten, der von innen nach außen folgende Schichten aufweist oder aus diesen Schichten besteht:
- gegebenenfalls eine **Schicht I,** welche eine Formmasse enthaltend Polyethylen (PE), Polyvinylidenfluorid (PVDF), Polytetrafluorethylen (PTFE), Perfluoralkoxy (PFA), Poly(tetrafluorethylen-perfluormethylvinylether) (MFA), Fluorethylenpropylen (FEP) und/oder Ethylen-Chlortrifluorethylen (ECTFE) umfasst; und vorzugsweise PE-HP, PVDF-HP, PFA-HP, MFA-HP und/oder FEP-HP umfasst oder daraus besteht;
- gegebenenfalls eine **Schicht II,** welche eine Haftvermittlerschicht ist und eine Formmasse enthaltend PA6, PA612, deren Copolymeren und/oder Mischungen davon umfasst oder daraus besteht;
- eine Sperrschicht **(Schicht III),** welche eine Formmasse enthaltend EthylenVinylalkohol-Copolymer (EVOH) umfasst oder daraus besteht;
- eine Haftvermittlerschicht **(Schicht IV),** welche eine Formmasse enthaltend PA6, PA612, deren Copolymeren und/oder Mischungen davon umfasst oder daraus besteht;
- eine **Schicht V,** welche eine Formmasse enthaltend mindestens ein kettenverlängertes Polyamid umfasst; und vorzugsweise kettenverlängertes PA 12, kettenverlängertes PA 612, kettenverlängertes Bio-PA, deren Copolymeren und/oder Mischungen davon umfasst; und besonders bevorzugt kettenverlängertes PA 12 umfasst oder daraus besteht;
- gegebenenfalls eine **Schicht VI,** welche eine Formmasse enthaltend kohlenstofffaserverstärktes PA 12 umfasst oder daraus besteht; und
- gegebenenfalls eine **Schicht VII,** welche eine Schutzummantelung ist.

2. Der mehrschichtige Hohlkörper gemäß Anspruch 1, **dadurch gekennzeichnet, dass**
- die Formmasse der Schicht V erhältlich ist durch Aufkondensierung einer PA12-, PA612- und/oder Bio-PA-Formmasse mit einer Verbindung mit mindestens zwei Carbonateinheiten und der Polyamidanteil der PA12-, PA612- und/oder Bio-PA-Formmasse herstellungsbedingt mindestens 5 ppm Phosphor in Form einer sauren Verbindung enthält, wobei
a) dem Polyamid vor der Compoundierung oder bei der Compoundierung 0,001 bis 10 Gew.-%, bezogen auf das Polyamid, eines Salzes einer schwachen Säure zugegeben wird, und
b) eine Mischung des fertigen Compounds und 0,005 bis 10 Gew-%, bezogen auf das Polyamid, der Verbindung mit mindestens zwei Carbonateinheiten hergestellt wird.

3. Der mehrschichtige Hohlkörper gemäß Anspruch 2, **dadurch gekennzeichnet, dass**
- der Polyamidanteil 20 bis 500 ppm Phosphor in Form einer sauren Verbindung enthält; und/oder
- dem Polyamid 0,001 bis 5 Gew.-%, bevorzugt 0,01 bis 2,5 Gew.-%, besonders bevorzugt 0,05 bis 1 Gew.-%, eines Salzes einer schwachen Säure zugegeben wird und die schwache Säure bevorzugt einen pKa-Wert von 2,5 oder höher besitzt und/oder das Salz der schwachen Säure bevorzugt ein Alkalimetallsalz, ein Erdalkalimetallsalz, das Salz eines Metalls der III. Hauptgruppe, das Salz eines Metalls der II. Nebengruppe oder ein Ammoniumsalz ist; und/oder
- das Polyamid unter Verwendung eines Diamins oder Polyamins als Regler hergestellt wurde; und/oder
- die Verbindung mit mindestens zwei Carbonateinheiten als Masterbatch eingesetzt wird.

4. Der mehrschichtige Hohlkörper gemäß einem oder mehreren der vorhergehenden Ansprüche, **dadurch gekennzeichnet, dass** dieser
- die Schicht I nicht enthält; oder
- die Schicht I und die Schicht II nicht enthält und Schicht III Sperr- und Innenschicht ist.

5. Der mehrschichtige Hohlkörper gemäß einem oder mehreren der vorhergehenden Ansprüche, **dadurch gekennzeichnet, dass**
- die Schichten I, II, III, IV und V, oder
- die Schichten I, II, III, IV, V, VI und VII, oder
- die Schichten III, IV und V, oder
- die Schichten III, IV, V, VI und VII
direkt aufeinander folgen; und/oder
- die Schicht III außermittig angeordnet ist;
und/oder
- die Dicke der Schicht III mindestens 0,2 mm und höchstens 0,6 mm beträgt, die Dicke der Schicht IV mindestens 0,1 mm und höchstens 0,2 mm beträgt, und die Dicke der Schicht V mindestens 6,0 mm und höchstens 10,0 mm beträgt, jeweils vorzugsweise bestimmt gemäß der Norm DIN EN 13480-3:2017-12;
und/oder
- der Innendurchmesser des erfindungsgemäßen mehrschichtigen Hohlkörpers, insbesondere des Onshore- und/oder Offshore-Rohrs, mindestens 30 mm oder mindestens 50 mm und/oder höchstens 160 mm oder höchstens 300 mm oder höchstens 350 mm beträgt.

6. Der mehrschichtige Hohlkörper gemäß einem oder mehreren der vorhergehenden Ansprüche, **dadurch gekennzeichnet, dass** die Formmasse der Schicht V
- zusätzliche Polyamide, deren Copolymeren und/oder Mischungen davon enthält,
- vorzugsweise PA 8, PA 9, PA 10, PA 11, PA 12, PA 4.6, PA 6.10, PA 6.12, PA 6.13, PA 6.14, PA 6.16, PA 8.10, PA 8.13, PA 9.10, PA 9.12, PA 10.10, PA 10.12, PA 10.14, PA 10.16, PA 10.18, PA 12.12, PA DACH.6 (Diaminocyclohexan), PA DACH.10, PA DACH.12, PA DACH.10/11, PA PACM.6 (4,4-Diaminodicyclohexylmethan), PA PACM.10, PA PACM.12, PA MACM.6 (3,3'-Dimethyl-4,4'-diaminocyclohexylmethan), PA MACM.10, PA MACM.12,. PA 6.T (T = Terephthalsäure), PA 9.T, PA 10.T, PA 12.T, PA 6.I (I = Isophthalsäure), PA 9.I, PA 10.I, PA 12.I, PA 6.N (2,6-Naphthalindicarbonsäure), PA 10.N, PA 12.N, PA MXD.6 (MXD = meta-Xyloldiamin), PA MXD.10, PA MXD.12, PA IPD.6 (Isophorondiamin), PA IPD.10, PA IPD.12, PA IND.6 (Isononyldiamin, 1,6-Diamino-2,4,4-trimethylhexan), PA IND.10, PA IND.12, PA ND.6 (Nonyldiamin, 1,6-Diamino-2,2,4-trimethylhexan), PA ND.10, PA ND.12, deren Copolymeren und/oder Mischungen davon.

7. Der mehrschichtige Hohlkörper gemäß einem oder mehreren der vorhergehenden Ansprüche, **dadurch gekennzeichnet, dass**
- die Formmasse der Schicht I PE-HP, PVDF-HP, PFA-HP, MFA-HP und/oder FEP-HP, jeweils einzeln oder insgesamt in einer Menge von mindestens 50 Gew.-%, bevorzugt mindestens 80 Gew.-%, besonders bevorzugt mindestens 85 Gew.-% und insbesondere bevorzugt mindestens 90 Gew.-% enthält, jeweils bezogen auf das Gesamtgewicht der Schicht I und/oder der Formmasse der Schicht I; und/oder
- die Formmasse der Schicht III EVOH in einer Menge von mindestens 10 Gew.-%, bevorzugter 20 bis 50 Gew.-%, bevorzugter 24 bis 44 Gew.-%, bevorzugter 27 bis 38 Gew.-%, bevorzugter 30 bis 35 Gew.-%, enthält, jeweils bezogen auf das Gesamtgewicht des mehrschichtigen Hohlkörpers und/oder das Gesamtgewicht der Schicht III und/oder der Formmasse der Schicht III; und/oder
- die Formmasse der Schicht V kettenverlängertes PA 12, kettenverlängertes PA 612, kettenverlängertes Bio-PA, deren Copolymere und/oder Mischungen davon, jeweils einzeln oder insgesamt in einer Menge von mindestens 80 Gew.-%, bevorzugt mindestens 85 Gew.-% und insbesondere bevorzugt mindestens 90 Gew.-% enthält, jeweils bezogen auf das Gesamtgewicht der Schicht V und/oder der Formmasse der Schicht V.

8. Der mehrschichtige Hohlkörper gemäß einem oder mehreren der vorhergehenden Ansprüche, **dadurch gekennzeichnet, dass** dieser durch ein ein- oder mehrstufiges Extrusionsverfahren oder Co-Extrusionsverfahren, ggf. in Kombination mit einer Wicklung hergestellt wird.

9. Der mehrschichtige Hohlkörper gemäß einem oder mehreren der vorhergehenden Ansprüche, **dadurch gekennzeichnet, dass** dieser wickelbar ist, insbesondere in industrierelevanten Durchmessern wickelbar, und vorzugsweise ein wickelbares Rohr ist.

10. Der mehrschichtige Hohlkörper gemäß einem oder mehreren der vorhergehenden Ansprüche, **dadurch gekennzeichnet, dass**
(i) dieser die Schicht I und die Schicht II enthält oder nicht enthält und Schicht III Sperr- und Innenschicht ist,
Schicht IV eine Formmasse ist, welche PA6 und PA612 umfasst oder beinhaltet, Schicht V eine Formmasse ist, welche kettenverlängertes PA 12 umfasst oder beinhaltet,
sich nach außen hin keine zusätzlichen Außenschichten anschließen,
die Schichten I, II, sofern vorhanden, III, IV und V direkt aufeinander folgen, und der mehrschichtige Hohlkörper bevorzugt verschweißbar, besonders bevorzugt spiegelverschweißbar und/oder muffenverschweißbar, ist;
oder
(ii) dieser die Schicht I und die Schicht II enthält oder nicht enthält und Schicht III Sperr- und Innenschicht ist,
Schicht IV eine Formmasse ist, welche PA6 und PA612 umfasst oder beinhaltet,
Schicht V eine Formmasse ist, welche kettenverlängertes PA 12 umfasst oder beinhaltet,
sich nach außen hin eine weitere Außenschicht (Schicht VI) anschließt, welche eine Formmasse ist, die kohlenstofffaserverstärktes PA 12 umfasst oder beinhaltet, sich nach außen hin noch eine weitere Außenschicht (Schicht VII) anschließt, welche eine Schutzummantelung ist,
die Schichten I, II, sofern vorhanden, III, IV, V, VI und VII direkt aufeinander folgen, und
der mehrschichtige Hohlkörper bevorzugt verschweißbar, besonders bevorzugt spiegelverschweißbar und/oder muffenverschweißbar, ist.

11. Der mehrschichtige Hohlkörper gemäß einem oder mehreren der vorhergehenden Ansprüche, **dadurch gekennzeichnet, dass** er
- ein Hohlprofil, vorzugsweise ein Rohr oder ein Behälter, ist; und/oder
- eine Komponente eines kraftstoffführenden Systems ist; und/oder
- ein Gasleitungsrohr ist; und/oder
- ein Onshore- und/oder Offshore-Rohr oder zumindest ein Teilstück davon ist.

12. Der mehrschichtige Hohlkörper gemäß einem oder mehreren der vorhergehenden Ansprüche, **dadurch gekennzeichnet, dass**
- die Formmasse der Schicht I und/oder die Formmasse der Schicht II und/oder die Formmasse der Schicht III und/oder die Formmasse der Schicht IV und/oder die Formmasse der Schicht V und/oder die Formmasse der Schicht VI und/oder die Formmasse der Schicht VII ein oder mehrere Additive enthält, vorzugsweise ausgewählt aus der Gruppe bestehend aus Stabilisatoren, zusätzlichen Polymeren, Schlagzäh-Modifizierungsmitteln, Weichmachern, Pigmenten und/oder Farbstoffen, Zusätzen, die die elektrische Leitfähigkeit erhöhen, Verarbeitungshilfsmitteln und Kombinationen davon und/oder vorzugsweise in einer Menge von höchstens 50 Gew.-%, bevorzugt höchstens 40 Gew.-%, besonders bevorzugt höchstens 35 Gew.-% und insbesondere bevorzugt höchstens 30 Gew.-%, jeweils bezogen auf das Gesamtgewicht der jeweiligen Schicht und/oder Formmasse; und/oder
- dieser eine oder mehrere zusätzliche Schichten enthält, die ausgewählt sind aus einer elektrisch leitfähigen Schicht und einer Elastomer-Ummantelung.

13. Der mehrschichtige Hohlkörper gemäß einem oder mehreren der vorhergehenden Ansprüche, **dadurch gekennzeichnet, dass** die Formmasse der Schicht I und/oder die Formmasse der Schicht II und/oder die Formmasse der Schicht III und/oder die Formmasse der Schicht IV und/oder die Formmasse der Schicht V und/oder die Formmasse der Schicht VI und/oder die Formmasse der Schicht VII, jeweils unabhängig voneinander, keinen Weichmacher enthält.

14. Verwendung des mehrschichtigen Hohlkörpers gemäß einem oder mehreren der vorgehenden Ansprüche
- als Hohlprofil, vorzugsweise als Rohr oder als Behälter; und/oder
- als Komponente eines kraftstoffführenden Systems; und/oder
- als Gasleitungsrohr; und/oder
- als Onshore- und/oder Offshore-Rohr oder zumindest als ein Teilstück davon.

15. Eine kraftstoffführende Anlage, insbesondere eine Onshore-Pipeline, eine Offshore-Pipeline oder Kombinationen davon umfassend den mehrschichtigen Hohlkörper gemäß einem oder mehreren der Ansprüche 1 bis 13.
